# EUROPÄISCHE PATENTANMELDUNG

(11) **EP 4 285 738 A1**
(43) Veröffentlichungstag der Anmeldung: **06.12.2023**
(21) Anmeldenummer: 22176816.1
(22) Anmeldetag: 01.06.2022
(51) Int. Cl.: A23L 5/10, A23B 4/16, A23B 7/005, A23L 3/3409

(54) **ANLAGE UND VERFAHREN ZUR HERSTELLUNG EINES PASTÖSEN LEBENSMITTELS**

(71) Anmelder: Challenger Industrial Solutions GmbH, 34385 Bad Karlshafen (DE)
(72) Erfinder: ALJUNEIDI, Numan, Dabouq, Amman (JO)
(74) Vertreter: Habermann Intellectual Property Partnerschaft von Patentanwälten mbB

(57) **Zusammenfassung**

Die Erfindung betrifft eine Anlage (1) zur Herstellung eines pastösen Lebensmittels (40) aus einer stärke- und/ oder eiweißhaltigen Grundzutat (13), zumindest einer ersten Ergänzungszutat und Wasser (14) mittels eines Kessel (2) und einer Mischvorrichtung (3). Mittels des Kessels (2) ist die Grundzutat (13) zu einer pastösen Lebensmittelbasis (17) verarbeitbar und mittels der Mischvorrichtung (3) ist aus der ersten Ergänzungszutat und der pastösen Lebensmittelbasis (17) das Lebensmittel (40) herstellbar. Die Anlage (1) ist mit Inertgasquelle (28) in Wirkverbindung gebracht und/ oder bringbar, durch die ein Inertgas bereitstellbar ist, wobei das Kesselvolumen (5), das Mischvolumen (23) und alle Rohrvolumina (31) des Rohrleitungssystems (4) derart gasleitend mit der Inertgasquelle (28) verbunden und/ oder verbindbar sind, dass die Volumina mit dem Inertgas be- und/ oder auffüllbar sind, sodass eine Kontaktierung der Lebensmittelbasis (17) und des Lebensmittels (40) mit Sauerstoff und/ oder einer Umgebungsluft verhinderbar ist.

Die Erfindung betrifft auch ein Verfahren (74) zur Herstellung des pastösen Lebensmittels (40).

## Beschreibung

Die Erfindung betrifft eine Anlage zur Herstellung eines pastösen Lebensmittels aus einer stärke- und/ oder eiweißhaltigen Grundzutat, zumindest einer ersten Ergänzungszutat und Wasser, wobei die Anlage einen Kessel, eine Mischvorrichtung und ein Rohrleitungssystem aufweist, wobei der Kessel ein Kesselvolumen, eine mit dem Kesselvolumen in Wirkverbindung gebrachte und/ oder bringbare Temperieranordnung, ein zumindest abschnittsweise innerhalb des Kesselvolumens angeordnetes Kesselrührwerk und einen Kesseleinlassabschnitt aufweist, wobei durch die Temperieranordnung ein Wärmestrom in das Kesselvolumen hinein und/ oder aus dem Kesselvolumen heraus erzeugbar ist, wobei durch den Kesseleinlassabschnitt zumindest die Grundzutat und das Wasser in das Kesselvolumen einfüllbar sind und wobei mittels des Kesselrührwerks mechanische Arbeit auf die in dem Kesselvolumen angeordneten Zutaten übertragbar ist, sodass mittels des Kessels die Grundzutat zu einer pastösen Lebensmittelbasis verarbeitbar ist, wobei der Kessel einen mit dem Kesselvolumen verbundenen und/ oder verbindbaren Kesselauslassabschnitt aufweist, wobei der Kesselauslassabschnitt mittels eines ersten Rohrabschnitts des Rohrleitungssystems mit einem Mischeinlassabschnitt der Mischvorrichtung verbunden und/ oder verbindbar ist, sodass die Lebensmittelbasis mittels des ersten Rohrabschnitts von dem Kessel zu der Mischvorrichtung transportierbar ist, wobei die Mischvorrichtung ein Mischvolumen und ein innerhalb des Mischvolumens angeordnetes Mischrührwerk aufweist und wobei die Mischvorrichtung zumindest einen Zutateneinlassabschnitt aufweist, durch den zumindest die erste Ergänzungszutat in das Mischvolumen einleitbar ist, sodass mittels der Mischvorrichtung das pastöse Lebensmittel herstellbar ist.

Bei der Verarbeitung und Herstellung von Lebensmitteln spielen Maßnahmen zum Herstellen und Aufrechterhalten der notwendigen Hygiene sowie zur Verbesserung der Haltbarkeit eines Lebensmittels eine herausragende Bedeutung. Insbesondere bei der Herstellung pastöser Lebensmittel ist dies eine Herausforderung, da im Zuge der Verarbeitung ein Großteil der natürlichen Konservierungsmechanismen ausgehebelt wird. So werden insbesondere die Zellwände der Grundzutaten aufgebrochen. Hierdurch erhalten die pastösen Lebensmittel einen Teil Ihres ernährungsphysiologischen Werts, da die in den Zellen enthaltenen Nährstoffe leichter Verfügbar werden, jedoch kommt diese verbesserte Verfügbarkeit von Nährstoffen auch denjenigen Mikroorganismen zugute, die an Fäulnisprozessen beteiligt sind, wie beispielweise Bakterien und/ oder Pilze. Aus diesem Grund weisen pastöse Lebensmittel häufig nur eine sehr begrenzte Haltbarkeit auf, wenn keine Konservierungsmaßnahmen ergriffen werden.

Im Bereich der Lebensmittelverarbeitung sind eine Vielzahl von Konservierungsmaßnahmen bekannt. So werden Fleisch- und Fischprodukte bereits seit Jahrhunderten durch einlegen in Salz konserviert. Modernere Konservierungsmaßnahmen sind das sogenannte Ultrahocherhitzen und das Pasteurisieren. Bei allen bekannten Konservierungsmaßnahmen kommt es zu einer Veränderung des Geschmacks des Lebensmittels. Beim Einlegen in Salze oder Säuren ist dies teilweise gewünscht. Unerwünscht ist dieser Effekt bei Lebensmitteln, deren Geschmack im frischen Zustand allgemein als "am besten" bewertet wird, wie beispielsweise Milchprodukte, Suppen oder Breie. Bei diesen Lebensmitteln werden üblicherweise die temperaturbasierten Konservierungsmaßnahmen ergriffen.

Es gibt jedoch auch Lebensmittel, die extrem empfindlich auf erhitzen reagieren und deren Geschmack durch die ergriffene Konservierungsmaßnahme möglichst wenig beeinflusst werden soll, weshalb Salze und/ oder Säuren zur Konservierung nicht geeignet sind. Dies sind beispielsweise pastöse Lebensmittel aus stärke- und eiweißhaltigen Grundzutaten, und hier insbesondere Hummus.

Hummus wird, je nach regionaler Variante, aus Kichererbsen und/ oder Bohnen als Grundzutat hergestellt. Die Grundzutat wird eingeweicht, gekocht und zu der Lebensmittelbasis verarbeitet. Die Lebensmittelbasis wird dann mit den weiteren Zutaten vermengt, um Hummus herzustellen. Seinen optimalen Geschmack entfaltet Hummus, wenn es frisch verzehrt wird. Bei Kontakt mit der Umgebungsluft oder Sauerstoff verdirbt das frische Hummus sehr schnell. Um Hummus auch industriell herstellen und verkaufen zu können, wird es üblicherweise utrahocherhitzt und abgepackt. Hierbei verändert sich der Geschmack des Hummus. Mit den derzeit bekannten Anlagen und Verfahren ist es nicht möglich, ein pastöses Lebensmittel, beispielsweise Hummus, haltbar herzustellen, ohne dass das pastöse Lebensmittel in einem Konservierungsschritt erhitzt werden muss, um die enthaltenen Mikroorganismen abzutöten.

Hummus ist, wie alle pastösen Lebensmittel mit einem hohen Stärke- und/ oder Eiweißanteil, ein sehr empfindliches Produkt und kann bereits durch Kontakt mit der Umgebungsluft verderben. Auch die Herstellung mit den aus den Stand er Technik bekannten Anlagen ist hygienisch herausfordernd und erfordert ein häufiges Reinigen der Anlagen. Insbesondere Rohrleitungen können schnell verschmutzen und bilden so einen idealen Nährboden für Mikroorganismen.

Als Aufgabe der vorliegenden Erfindung wird es daher angesehen, eine Anlage zur Verfügung zu stellen, mittels der ein haltbares pastöses Lebensmittel herstellbar ist, ohne dass das Lebensmittel in einem gesonderten Konservierungsschritt konserviert wird.

Diese Aufgabe wird erfindungsgemäß dadurch gelöst, dass die die Anlage mit einer Inertgasquelle in Wirkverbindung gebracht und/ oder bringbar ist und/ oder die Inertgasquelle aufweist, wobei durch die Inertgasquelle ein Inertgas bereitstellbar ist, wobei das Kesselvolumen, das Mischvolumen und alle Rohrvolumina des Rohrleitungssystems derart gasleitend mit der Inertgasquelle verbunden und/ oder verbindbar sind, dass die Volumina mit dem Inertgas be- und/ oder auffüllbar sind, sodass eine Kontaktierung der Lebensmittelbasis und des Lebensmittels mit Sauerstoff und/ oder einer Umgebungsluft verhinderbar ist. Durch eine derartige Ausgestaltung der erfindungsgemäßen Anlage wird erreicht, dass die Vermehrung sauerstoffatmender Mikroorganismen innerhalb der gesamten Anlage hemmbar ist.

Es ist dabei vorteilhafterweise vorgesehen, dass das Rohrleitungssystem auch entsprechende Fördermaschinen aufweist, beispielswese Förderpumpen, Förderschnecken, Förderbänder oder Ähnliches, wobei von den Fördermaschinen umschlossene Fördervolumina ebenfalls mit dem Inertgas be- und/ oder auffüllbar sind, sodass die Lebensmittelbasis und das Lebensmittel auch bei einem Durchgang durch die Fördermaschinen nicht mit der Umgebungsluft oder Sauerstoff in Berührung kommen.

Die Befüllung aller für die Herstellung des pastösen Lebensmittels relevanten Volumina mit dem Inertgas führt dazu, dass, anders als bei den aus dem Stand der Technik bekannten Anlagen, auch in denjenigen Volumina, in denen die Mikroorganismenpopulation nicht durch Verfahrensprozesse verringert wird, wie etwa durch das Kochen im Kessel, die Vermehrung der Mikroorganismen zumindest gehemmt ist, sodass das pastöse Lebensmittel als haltbares Produkt aus der Anlage ausleitbar ist. Dabei meint "haltbar" im Sinne des Erfindungsgedankens, dass das pastöse Lebensmittel nach seiner Herstellung einen so geringen Besatz an Mikroorganismen aufweist, dass es auch ohne weitergehende Konservierungsmaßnahmen, wie etwa Ultrahocherhitzen oder Pasteurisieren, in einem abgepackten Zustand mehrere Wochen haltbar ist.

Um das Inertgas möglichst effizient und effektiv in der Anlage verteilen zu können, ist es bei einer vorteilhaften Umsetzung des Erfindungsgedankens vorgesehen, dass die Anlage ein Inertgasverteilsystem mit Inertgasleitungen und Inertgasflusssteuerelementen aufweist, wobei das Inertgas mittels des Inertgasverteilsystems zumindest mittelbar von der Inertgasquelle in die Volumina der Anlage einleitbar ist. Dabei ist vorgesehen, dass mittels der Inertgasflusssteuerelemente ein Fluss des Inertgases durch die Inertgasleitungen steuerbar ist. Besonders bevorzugt sind die Inertgasflusssteuerelemente Ventile, insbesondere Regel- und Schaltventile.

Bei einer besonders kosteneffizienten Ausgestaltung der erfindungsgemäßen Anlage ist es vorteilhafterweise vorgesehen, dass die Anlage derart ausgebildet ist, dass als Inertgas Stickstoff verwendbar ist. Stickstoff ist ein kostengünstiges, gut verfügbares und einfach zu handhabendes Industriegas. Um die Anlage an die Verwendung von Stickstoff anzupassen, ist es vorgesehen, dass die Volumina mittels geeigneter Dichtungen gegen die Umgebungsluft abgedichtet werden.

Bei einer besonders bevorzugten Umsetzung des Erfindungsgedankens ist es vorgesehen, dass der Stickstoff innerhalb der Anlage stets unter Überdruck gehalten wird, sodass Leckagen durch einen Druckabfall leicht zu detektieren sind und ein Eindringen der Umgebungsluft verhindert ist.

Bei einer vorteilhaften Umsetzung des Erfindungsgedankens ist es vorgesehen, dass die Inertgasquelle einen Gasgenerator aufweist, wobei mittels des Gasgenerators das Inertgas aus der Umgebungsluft extrahierbar ist. Durch eine derartige Ausgestaltung der erfindungsgemäßen Anlage ist ein Betrieb der Anlage möglich, ohne dass eine Anlieferung von Inertgas erforderlich ist.

Da es vorteilhafterweise vorgesehen ist, dass das Inertgas insbesondere Stickstoff sein kann, sind eine Vielzahl von Verfahren bekannt, mittels derer Stickstoff aus der Umgebungsluft extrahiert werden kann. So ist Stickstoff beispielsweise durch die fraktionierte Destillation verflüssigter Luft in Luftzerlegungsanlagen nach dem Linde-Verfahren mit einer Reinheit von bis zu 99,99999 % herstellbar. Um Stickstoff mit Verunreinigungen unter 1 ppb (part per billion) herzustellen, ist es vorteilhafterweise vorgesehen, dass der Gasgenerator eine Gasreinigungsvorrichtung aufweisen kann.

Es ist ebenfalls möglich und erfindungsgemäß vorgesehen, dass der Gasgenerator nach dem sogenannten Membranverfahren arbeiten kann. Hierbei wird ein Gasstrom mit einem Druck von 5 bis 13 bar durch eine Kunststoffmembran gepresst, wobei eine Diffusionsgeschwindigkeit von Stickstoff und Argon durch die Kunststoffmembran deutlich langsamer ist, als jene von Sauerstoff, Wasser und Kohlendioxid, dadurch ist der Gasstrom auf einer Druckseite der Kunststoffmembran mit Stickstoff anreicherbar.

Um mit der erfindungsgemäßen Anlage eine möglichst große Menge des pastösen Lebensmittels herstellen zu können, ist es bei einer vorteilhaften Umsetzung des Erfindungsgedankens vorgesehen, dass die Anlage zumindest zwei Kessel und/ oder zumindest zwei Mischvorrichtungen aufweist. Es ist vorgesehen, dass die Herstellung des pastösen Lebensmittels mittels des Kessels der erfindungsgemäßen Anlage chargenweise durchführbar ist. "Chargenweise" im Sinne der vorliegenden Erfindung bedeutet, dass eine definierte Menge der Grundzutat in den Kessel eingefüllt, eingeweicht, gekocht und unter Zufuhr mechanischer Arbeit zu der pastösen Lebensmittelbasis verarbeitbar ist, wobei diese Charge zunächst aus dem Kessel entnommen werden muss, bevor die nächste Charge des pastösen Lebensmittels hergestellt werden kann. Aus dieser chargenweisen Herstellung ergibt sich, dass nachgeordnete Produktionsanlagen mit nur einem Kessel nicht dauerhaft auslastbar sind, sodass es hier zu Effizienzverlusten kommen kann. Derartige Effizienzverluste sind durch die erfindungsgemäß vorgesehene Verwendung von zumindest zwei Kesseln verringerbar, indem die zumindest zwei Kessel derart betreibbar sind, dass stets pastöse Lebensmittelbasis zum Beschicken nachgeordneter Produktionsanlagen, hier insbesondere der Mischvorrichtung bzw. der Mischvorrichtungen, verfügbar ist.

Darüber hinaus ist es ebenfalls vorgesehen, dass das pastöse Lebensmittel in der Mischvorrichtung chargenweise aus der pastösen Lebensmittelbasis herstellbar ist. Hierzu ist das Mischvolumen mit einer definierten Menge der pastösen Lebensmittelbasis befüllbar. Auch bei der chargenweisen Herstellung des pastösen Lebensmittels sind nachgeordnete Produktionsanlagen mittels nur einer Mischvorrichtung nicht dauerhaft auslastbar, sodass es auch hier zu Effizienzverlusten kommen kann. Derartige Effizienzverluste sind durch die erfindungsgemäß vorgesehene Verwendung von zumindest zwei Mischvorrichtungen verringerbar, indem die zumindest zwei Mischvorrichtungen derart betreibbar sind, dass stets pastöses Lebensmittel zum Beschicken nachgeordneter Produktionsanlagen, insbesondere einer Qualitätskontroll- und/ oder Abfüllanlage, verfügbar ist.

Es ist vorteilhafterweise vorgesehen, dass die Erfindungsgemäße Anlage auf einfache Art und Weise skalierbar ist, indem die Anzahl der Kessel und/ oder der Mischvorrichtungen verändert wird. So kann die Anzahl der Kessel und/ oder Mischvorrichtungen erhöht werden, wenn eine größere Menge des pastösen Lebensmittels hergestellt werden soll und die Anzahl der Kessel und/ oder Mischvorrichtungen kann verringert werden, wenn eine geringere Menge des pastösen Lebensmittels hergestellt werden soll.

Um fertige Chargen des pastösen Lebensmittels zwischenspeichern zu können, ist es bei einer vorteilhaften Umsetzung des Erfindungsgedankens vorgesehen, dass die Anlage zumindest einen Speicherbehälter mit einem Speichervolumen, einem Speichereinlassabschnitt und einem Speicherauslassabschnitt aufweist, wobei der Speichereinlassabschnitt mittels eines dritten Rohrabschnitts des Rohrleitungssystems mit einem Mischauslassabschnitt der Mischvorrichtung verbunden und/ oder verbindbar ist und wobei das Speichervolumen derart mit der Inertgasquelle in Wirkverbindung gebracht und/ oder bringbar ist, dass das Speichervolumen mit dem Inertgas be- und/ oder auffüllbar ist, sodass das Lebensmittel mittels des dritten Rohrabschnitts von der Mischvorrichtung zu dem Speicherbehälter transportierbar und in dem Speichervolumen ohne Sauerstoff- und Umgebungsluftkontakt lagerbar ist. Durch eine derartige Ausgestaltung der erfindungsgemäßen Anlage wird erreicht, dass das fertig produzierte pastöse Lebensmittel auch bei einer prozessbedingten Zwischenlagerung nicht mit Sauerstoff- und Umgebungsluft in Berührung kommt.

Durch die erfindungsgemäß vorgesehenen Speicherbehälter ist es ermöglicht, dass ein chargenweise die Mischvorrichtung verlassender Strom an fertigem pastösen Lebensmittel geglättet und zu einem gleichmäßigen Strom des pastösen Lebensmittels umgewandelt werden kann, sodass die nachgeordneten Produktionsanlagen mit dem gleichmäßigen Strom des pastösen Lebensmittels beschickbar sind.

Um das fertige Lebensmittel zu verpacken, ist es bei einer vorteilhaften Umsetzung des Erfindungsgedankens vorgesehen, dass die Anlage zumindest eine Abfüllvorrichtung mit einem Abfülleinlassabschnitt, einer Abfüllanordnung und einer Versiegelungsanordnung aufweist, wobei der Abfülleinlassabschnitt mittels eines vierten Rohrabschnitts des Rohrleitungssystems mit einem Speicherauslassabschnitt des Speicherbehälters und/ oder mittels eines fünften Rohrleitungsabschnitts mit dem Mischauslassabschnitt der Mischvorrichtung verbunden und/ oder verbindbar ist, sodass das Lebensmittel mittels des vierten Rohrabschnitts von dem Speicherbehälter und/ oder mittels des fünften Rohrleitungsabschnitts von der Mischvorrichtung zu der Abfüllvorrichtung transportierbar ist, wobei das Lebensmittel mittels der Abfüllanordnung innerhalb eines Abfüllarbeitsvolumens in Lebensmittelbehälter abfüllbar ist, wobei die Lebensmittelbehälter innerhalb eines Versiegelungsarbeitsvolumen mittels der Versiegelungsanordnung verschließ- und versiegelbar sind und wobei der Abfülleinlassabschnitt sowie alle Arbeitsvolumina der Abfüllvorrichtung derart zumindest mittelbar mit der Inertgasquelle in Wirkverbindung gebracht und/ oder bringbar sind, dass das Lebensmittel ohne Umgebungsluft- und Sauerstoffkontakt abfüllbar ist. Durch die Ausgestaltung der erfindungsgemäßen Anlage mit einer integrierten Abfüllvorrichtung wird erreicht, dass das pastöse Lebensmittel zeitnah verarbeitbar ist und so das Risiko dafür, dass das Lebensmittel verdirbt, minimierbar ist.

Alternativ besteht vorteilhafterweise auch die Möglichkeit, dass das pastöse Lebensmittel nach seiner Herstellung zu einer externen Abfüllvorrichtung transportiert wird. Hierbei ist es vorteilhafterweise vorgesehen, dass die für einen Transport verwendeten Logistikbehälter mit dem Inertgas be- und/ oder auffüllbar sind, sodass das pastöse Lebensmittel ohne Umgebungsluft- und Sauerstoffkontakt zu der externen Abfüllvorrichtung transportierbar ist

Um einen möglichst hohen Automatisierungsgrad bei der Herstellung des pastösen Lebensmittels erreichen zu können, ist es bei einer vorteilhaften Umsetzung des Erfindungsgedankens vorgesehen, dass die Anlage zumindest einen Ergänzungszutatenbehälter aufweist, wobei der Ergänzungszutatenbehälter ein Zutatenvolumen und einen Zutatenauslassabschnitt aufweist, wobei der Zutatenauslassabschnitt mittels eines Zutatenrohrabschnitts der Rohrleitungsanordnung mit dem Zutateneinlassabschnitt der Mischvorrichtung verbunden ist, wobei in dem Zutatenvolumen die erste Ergänzungszutat und/ oder eine weitere Ergänzungszutat lagerbar ist, wobei das Zutatenvolumen derart mit der Inertgasquelle in Wirkverbindung gebracht und/ oder bringbar ist, dass das Zutatenvolumen mit dem Inertgas be- und/ oder auffüllbar ist, sodass die erste Ergänzungszutat und/ oder die weitere Ergänzungszutat mittels des Zutatenrohrabschnitts von dem Ergänzungszutatenbehälter zu der Mischvorrichtung transportierbar und in dem Zutatenvolumen ohne Sauerstoff- und Umgebungsluftkontakt lagerbar sind. Durch eine derartige Ausgestaltung der erfindungsgemäßen Anlage sind die Ergänzungszutaten automatisiert in das Mischvolumen einbringbar.

Die Verwendung von Ergänzungszutatenbehältern, die mit dem Inertgas be- und/ oder auffüllbar sind, ist insbesondere vorteilhaft, da so vermeidbar ist, dass Keime aus der Umgebungsluft mittels der Ergänzungszutaten in das pastöse Lebensmittel gelangen. Weiterhin ist die Menge an Sauerstoff, die mittels der Ergänzungszutaten in das pastöse Lebensmittel eingetragen wird, durch die Verwendung von Inertgas auch in den Ergänzungszutatenbehältern minimierbar. Durch diese Ausgestaltung der erfindungsgemäßen Anlage ist die Haltbarkeit des pastösen Lebensmittels auf einfache Art und Weise erhöhbar.

Um das Risiko einer Kontamination des pastösen Lebensmittels weiter zu verringern, ist es bei einer vorteilhaften Ausgestaltung der erfindungsgemäßen Anlage vorgesehen, dass die Anlage zumindest einen Wasservorratsbehälter aufweist, wobei der Wasservorratsbehälter ein Wasservolumen und einen Wasserauslassabschnitt aufweist, wobei der Wasserauslassabschnitt mittels eines sechsten Rohrabschnitts der Rohrleitungsanordnung mit dem Zutateneinlassabschnitt der Mischvorrichtung und/ oder mittels eines siebten Rohrabschnitts mit dem Kesseleinlassabschnitt des Kessels verbunden ist, wobei in dem Wasservolumen das Wasser lagerbar ist, wobei das Wasservolumen derart mit der Inertgasquelle in Wirkverbindung gebracht und/ oder bringbar ist, dass das Wasservolumen mit dem Inertgas be- und/ oder auffüllbar ist, sodass das Wasser mittels des sechsten Rohrabschnitts von dem Wasservorratsbehälter zu der Mischvorrichtung und/ oder mittels des siebten Rohrabschnitts zu dem Kessel transportierbar und in dem Wasservolumen ohne Sauerstoff- und Umgebungsluftkontakt lagerbar ist. Durch eine derartige Ausgestaltung der erfindungsgemäßen Anlage wird erreicht, dass die Menge an Sauerstoff, der in dem Wasser gelöst ist sowie eine Keimbelastung des Wassers durch eine Aufnahme von Keimen aus der Umgebungsluft, verringerbar ist.

Gase aus der Umgebungsluft lösen sich in Wasser. Ob ein Gas sich im Wasser löst, oder ob es vom Wasser in die Umgebungsluft ausgast, hängt davon ab, in welchem der beiden Medien, Wasser oder Umgebungsluft, der Partialdruck des jeweiligen Gases größer ist, wobei der Übergang stets vom hohen Partialdruck zum niedrigen Partialdruck erfolgt. Durch die erfindungsgemäß vorgesehene Lagerung des Wassers in dem mit dem Inertgas aufgefüllten Wasservorratsbehälter wird erreicht, dass der im Wasser gelöste Sauerstoff aus dem Wasser ausgast und sich dafür Stickstoff in dem Wasser löst. Der ausgegaste Sauerstoff steht eventuell vorhandenen Mikroorganismen so im weiteren Verarbeitungsprozess nicht zur Verfügung und das Risiko dafür, dass die pastöse Lebensmittelbasis und/ oder das pastöse Lebensmittel kontaminiert werden, ist so verringerbar.

Bei einer besonders vorteilhaften Umsetzung des Erfindungsgedankens ist es vorgesehen, dass das Inertgas in dem Wasservorratsbehälter zyklisch und/ oder kontinuierlich austauschbar ist, um so den Sauerstoffgehalt des Wassers möglichst stark verringern zu können.

Um mittels der erfindungsgemäßen Anlage auch Hummus herstellen zu können, ist es vorteilhafterweise vorgesehen, dass die Anlage zur Herstellung von Hummus eingerichtet ist, wobei die Grundzutat Kichererbsen und/ oder Bohnen sind, wobei die Kichererbsen und/ oder Bohnen mittels des Kessels zu der Grundzutat verarbeitbar sind, wobei die erste Ergänzungszutat Tahini und/ oder eine vergleichbare Sesampaste ist, wobei die Anlage einen ersten Ergänzungszutatenbehälter aufweist, in dem die erste Ergänzungszutat lagerbar ist, wobei die Anlage einen zweiten Ergänzungszutatenbehälter aufweist, in dem eine zweite Ergänzungszutat lagerbar ist, wobei die zweite Ergänzungszutat ein Speiseöl ist, wobei die Anlage einen dritten Ergänzungszutatenbehälter aufweist, wobei die dritte Ergänzungszutat ein Säuerungsmittel ist, wobei der erste Ergänzungszutatenbehälter mit einem ersten Zutatenrohrabschnitt, der zweite Ergänzungszutatenbehälter mit einem zweiten Zutatenrohrabschnitt und der dritte Ergänzungszutatenbehälter mit einem dritten Zutatenrohrabschnitt mit dem Zutateneinlassabschnitt der Mischvorrichtung verbunden sind, sodass mittels der Zutatenrohrabschnitte die erste, zweite und dritte Ergänzungszutat in das Mischvolumen einleitbar sind. Mittels der so ausgebildeten erfindungsgemäßen Anlage ist Hummus herstellbar.

Anpassung im Sinne der vorliegenden Erfindung meint insbesondere, dass die Behälter geeignete Hilfselemente, beispielsweise Rührwerke, Filter oder Ähnliches aufweisen, um eine Weiterverarbeitung der jeweils in dem Behälter gelagerten Zutat zu ermöglichen. Darüber hinaus ist es vorgesehen, dass die Fördermaschinen des Rohrleitungssystems an eine Konsistenz der Zutaten für das Hummus angepasst sind, beispielsweise indem das Rohrleitungssystem eine Drehkolbenpumpe aufweist, die mit dem ersten Ergänzungszutatenbehälter in Wirkverbindung gebracht ist.

Um eine einfache Reinigung der Anlage zu ermöglichen und so auf einfache Art und Weise das erforderliche Maß an Hygiene einhalten zu können, ist es bei einer vorteilhaften Umsetzung des Erfindungsgedankens vorgesehen, dass die Anlage eine Spülreinigungseinrichtung aufweist, mittels der zumindest der Kessel und die Mischvorrichtung reinigbar sind. Mittels der erfindungsgemäß Vorgesehenen Spülreinigungseinrichtung ist vorteilhafterweise das sogenannten CIP-Verfahren (Cleaning in Place) durchführbar. Bei diesem Verfahren, das auch als ortsgebundene Reinigung bezeichnet wird, ist die Anlage ohne wesentliche Demontage reinigbar, indem durch exakte Definition von Reinigungsmitteln, Drücken, Temperaturen und Zeiten ein reproduzierbarer Reinigungsprozess festlegbar ist.

Es ist vorteilhafterweise vorgesehen, dass die Spülreinigungseinrichtung eine Zentraleinheit und eine Spülleitungsanordnung aufweist, wobei die Spülleitungsanordnung Reinigungsversorgungsleitungen und Rücklaufleitungen aufweist, wobei mittels der Reinigungsversorgungsleitungen ein Reinigungsmittel zumindest von der Zentraleinheit zu dem Kessel und von der Zentraleinheit zu der Mischvorrichtung leitbar ist, sodass die Volumina des Kessels und der Mischvorrichtung mit dem Reinigungsmittel spülbar sind. Dabei ist es vorgesehen, dass die Rücklaufleitungen derart mit den Volumina des Kessels und der Mischvorrichtung in Wirkverbindung gebracht und/ oder bringbar sind, dass das verunreinigte Spülmittel von den Volumina zu der Zentraleinheit leitbar ist.

Besonders bevorzugt ist es vorgesehen, dass alle Volumina der Anlage mit der Spülreinigungseinrichtung in Wirkverbindung gebracht und/ oder bringbar sind, sodass die komplette Anlage mittels der Spülreinigungseinrichtung reinigbar ist. Es ist vorteilhafterweise auch vorgesehen, dass die Rohrleitungsanordnung Reinigungszugangsabschnitte aufweist, wobei die Reinigungszugangsabschnitte mittels der Reinigungsversorgungsleitungen und der Rücklaufleitungen verbunden und/ oder verbindbar sind, dass einzelne Rohrabschnitte der Rohrleitungsanordnung separat reinigbar sind.

Bei einer besonders vorteilhaften Umsetzung des Erfindungsgedankens ist es vorgesehen, dass die Anlage im laufenden Betrieb reinigbar ist, ohne dass die Produktion des pastösen Lebensmittels unterbrochen werden muss. Hierzu ist es vorgesehen, dass die Anlage zumindest zwei Kessel und zwei Mischvorrichtungen aufweist, die jeweils abwechselnd in Betrieb sind, um das pastöse Lebensmittel bzw. die pastöse Lebensmittelbasis herzustellen und anschließend gereinigt zu werden.

Es ist vorgesehen, dass die Spülreinigungseinrichtung vorteilhafterweise auch eine Dosiervorrichtung aufweist, mittels derer eine Zusammensetzung des Reinigungsmittel veränderbar ist. So ist es beispielsweise möglich und erfindungsgemäß vorgesehen, dass das Reinigungsmittel für verschiedene Spülreinigungsvorgänge unterschiedliche Zusammensetzungen aufweisen kann. Darüber hinaus ist es auch vorgesehen, dass die Spülreinigungsvorrichtung ein Heizanordnung aufweisen kann, mittels derer das Spülmittel auf eine definierte Temperatur aufheizbar ist, sodass die zu reinigenden Volumina auch auskochbar sind.

Um ein Kontamination gereinigter Volumina zu verhindern, ist es vorteilhafterweise vorgesehen, dass die Spülreinigungsvorrichtung und das Inertgasverteilsystem so aneinander angepasst sind, dass die Volumina auch dann mit dem Inertgas be- und/ oder auffüllbar sind, wenn sie mittels der Spülreinigungsvorrichtung gereinigt werden und/ oder gereinigt worden sind.

Um eine ausreichende Befüllung der Anlage mit dem Inertgas zu überwachen, ist es bei einer vorteilhaften Umsetzung des Erfindungsgedankens vorgesehen, dass die Anlage eine Überwachungseinrichtung aufweist, wobei die Überwachungseinrichtung zumindest ein Sensorelement und zumindest eine Auswerteanordnung aufweist, wobei das Sensorelement und die Auswerteanordnung derart aneinander angepasst und mit zumindest einem Volumen der Anlage in Wirkverbindung gebracht sind, dass mittels der Überwachungseinrichtung bestimmbar ist, ob ein Inertgasanteil innerhalb des zumindest einen Volumens der Anlage ausreichend ist um einem Verderben des Lebensmittels entgegenzuwirken. Es ist erfindungsgemäß vorteilhafterweise vorgesehen, dass der Inertgasanteil so einstellbar ist, dass der Sauerstoffanteil in den Volumina unter 1 Volumen-%, bevorzugt unter 0,5 Vol.-% und besonders bevorzugt unter 0,2 Vol.-% liegt. Durch diesen geringen Sauerstoffanteil wird erreicht, dass Fäulnisprozesse in der pastösen Lebensmittelbasis und in dem pastösen Lebensmittel nahezu zum Erliegen kommen, sodass die Haltbarkeit des pastösen Lebensmittels erhöhbar ist.

Hierzu ist es vorteilhafterweise vorgesehen, dass die Überwachungseinrichtung auf das Inertgasverteilsystem wirken kann, um den Inertgasanteil in der Anlage einzustellen, beispielsweise mittels geeigneter Ventile und Aktuatoren.

Besonders bevorzugt weist die Anlage eine Vielzahl von Sensorelementen auf, die mit der Auswerteanordnung in Wirkverbindung gebracht sind, wobei die Sensorelemente innerhalb der Anlage verteilt sind, sodass möglichst viele unterschiedliche Abschnitte der Anlage überwachbar sind.

Die Erfindung betrifft auch ein Verfahren zur Herstellung eines pastösen Lebensmittels mittels einer der zuvor beschriebenen Anlagen, wobei zunächst in einem Zerkochvorgang aus der Grundzutat die pastöse Lebensmittelbasis hergestellt wird, wobei der Zerkochvorgang einen Einweichschritt und einen auf den Einweichschritt folgenden Kochschritt aufweist, wobei die Grundzutat in dem Einweichschritt zusammen mit dem Wasser und unter Zufuhr von Wärme mittels der Temperieranordnung eingeweicht wird, wobei die in dem Einweichschritt eingeweichte Grundzutat in dem Kochschritt unter Zufuhr von Wärme mittels der Temperieranordnung und unter Zufuhr mechanischer Arbeit mittels des Kesselrührwerks zu der pastösen Lebensmittelbasis verarbeitet wird, wobei in einem auf den Zerkochvorgang folgenden Mischvorgang aus der pastösen Lebensmittelbasis und der zumindest einen Ergänzungszutat mittels der Mischvorrichtung das pastöse Lebensmittel hergestellt wird, wobei der Mischvorgang einen Einfüllschritt und einen auf den Einfüllschritt folgenden Vermengungsschritt aufweist, wobei in dem Einfüllschritt die pastöse Lebensmittelbasis und die zumindest eine Ergänzungszutat in das Mischvolumen eingefüllt werden, wobei in dem Vermengungsschritt die pastöse Lebensmittelbasis und die zumindest eine Ergänzungszutat mittels des Mischrührwerks miteinander vermengt werden sodass das pastöse Lebensmittel entsteht, wobei das Kesselvolumen und das Mischvolumen in einem vor dem Zerkochvorgang erfolgenden Inertgaseinleitungsschritt mit dem Inertgas be- oder aufgefüllt werden und während des Zerkochvorgangs sowie während des Mischvorgangs so mit der Inertgasquelle in Wirkverbindung gebracht werden, dass eine Kontaktierung der Lebensmittelbasis und des Lebensmittels mit Sauerstoff und/ oder der Umgebungsluft verhindert wird. Durch die Herstellung des pastösen Lebensmittels mittels des erfindungsgemäßen Verfahrens, insbesondere unter Verwendung des Inertgases, ist die Haltbarkeit des pastösen Lebensmittels erhöhbar.

Durch den erfindungsgemäß vorgesehenen Zerkochvorgang wird die Grundzutat aufgeschlossen, sodass die Nährstoffe leichter verwertbar sind. Darüber hinaus werden die noch vorhandenen Keime und Krankheitserreger abgetötet. Durch das erfindungsgemäß vorgesehene Auffüllen des Kesselvolumens mit dem Inertgas, wird verhindert, dass nach dem Zerkochvorgang eventuell vorhandene Restbesiedlungen von Keimen und/ oder Krankheitserregern sich erneut vermehren können.

Es ist erfindungsgemäß vorteilhafterweise vorgesehen, dass in dem Kochschritt des Zerkochvorgangs in dem Kesselvolumen ein Überdruck eingestellt werden kann, sodass eine Kochtemperatur über 100°C erhöht werden kann. Besonders bevorzugt beträgt die Kochtemperatur mehr als 120°C, wobei dann ein Kesseldruck in dem Kesselvolumen ca. 2 bar beträgt.

Bei einer vorteilhaften Umsetzung des erfindungsgemäßen Verfahrens ist es vorgesehen, dass das Verfahren mittels einer Anlage mit einem Speicherbehälter durchgeführt wird, wobei auf den Mischvorgang ein Zwischenspeicherungsschritt folgt, in dem das pastöse Lebensmittel von der Mischvorrichtung in den Speicherbehälter geleitet wird, wobei das Speichervolumen in dem Inertgaseinleitungsschritt mit dem Inertgas be- oder aufgefüllt wird und wobei der Speicherbehälter während des Zwischenspeicherungsschritts so mit der Inertgasquelle in Wirkverbindung gebracht wird, dass eine Kontaktierung des Lebensmittels mit Sauerstoff und/ oder der Umgebungsluft verhindert wird. Mittels des erfindungsgemäß vorgesehenen Zwischenspeicherschritts werden Schwankungen bei der Produktion des pastösen Lebensmittels, die Auswirkungen auf nachgeordnete Produktionsanlagen haben können, beispielsweise auf Abfüllanlagen.

Durch die Verwendung des Inertgases auch bei dem Zwischenspeicherschritt, wird die Haltbarkeit des pastösen Lebensmittels verbessert.

Bei einer Vorteilhaften Ausgestaltung der Erfindung ist es vorgesehen, dass das Verfahren mittels einer Anlage durchgeführt wird, die einen Abfüllvorrichtung aufweist, wobei auf den Mischvorgang oder den Zwischenspeicherungsschritt ein Verpackungsvorgang erfolgt, in dem mittels der Abfüllvorrichtung das Lebensmittel in die Lebensmittelbehälter abgepackt wird, wobei der Verpackungsvorgang einen Abfüllschritt und einen nach dem Abfüllschritt erfolgenden Versiegelungsschritt aufweist, wobei in dem Abfüllschritt das Lebensmittel zunächst von der Mischvorrichtung und/ oder dem Speicherbehälter zu der Abfüllvorrichtung geleitet wird, wobei das Lebensmittel anschließend mittels der Abfüllanordnung der Abfüllvorrichtung innerhalb des Abfüllarbeitsvolumens in die Lebensmittelbehälter abgefüllt wird, wobei die befüllten Lebensmittelbehälter in dem Versiegelungsschritt, der sich an den Abfüllvorgang anschließt, mittels der Versiegelungsanordnung verschlossen und versiegelt werden, wobei alle Arbeitsvolumina der Abfüllvorrichtung in dem Inertgaseinleitungsschritt mit dem Inertgas be- oder aufgefüllt werden und derart zumindest mittelbar mit der Inertgasquelle in Wirkverbindung gebracht werden dass das Lebensmittel ohne Umgebungsluft- und Sauerstoffkontakt abgefüllt wird.

Bei einer vorteilhaften Umsetzung der Erfindungsgedankens ist es vorgesehen, dass die pastöse Lebensmittelbasis und/ oder das pastöse Lebensmittel nach und/ oder während der einzelnen Verfahrensschritte gekühlt werden. Besonders bevorzugt erfolgt das Kühlen auf Temperaturen unter 10°C.

Es ist vorteilhafterweise vorgesehen, dass in dem Inertgaseinleitungsschritt zumindest das Kesselvolumen und das Mischvolumen mit dem Inertgas aufgefüllt werden. Besonders bevorzugt werden alle Volumina der Anlage mit dem Inertgas aufgefüllt.

Weitere vorteilhafte Umsetzungen des Erfindungsgedankens werden anhand von in den Zeichnungen dargestellten Ausführungsbeispielen erläutert. Es zeigen:
Figuren 1A bis 5 schematisch dargestellte Ansichten von Ausführungsformen der erfindungsgemäßen Anlage und
Figur 6 eine schematische Darstellung einer Ausführungsform des erfindungsgemäßen Verfahrens.

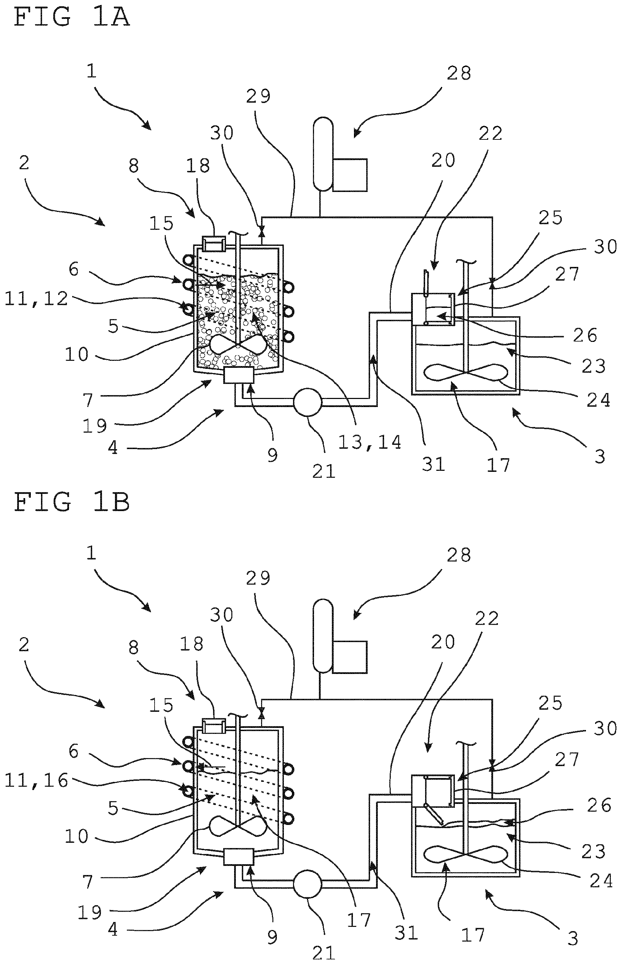

In den Figuren 1A und 1B ist eine schematisch dargestellte Ansicht einer Ausführungsform der erfindungsgemäßen Anlage 1 gezeigt. Die Anlage 1 weist einen Kessel 2, eine Mischvorrichtung 3 und ein Rohrleitungssystem 4 auf. Der Kessel 2 weist ein Kesselvolumen 5, eine Temperieranordnung 6, ein Kesselrührwerk 7, einen Kesseleinlassabschnitt 8 und einen Kesselauslassabschnitt 9 auf. Das Kesselrührwerk 7 ist mit einer Antriebsmaschine (weder dargestellt, noch bezeichnet) in Wirkverbindung gebracht und erstreckt sich in das Kesselvolumen 5 hinein. Das gezeigte Kesselrührwerk 7 ist lediglich schematisch dargestellt.

Die schematisch dargestellte Temperieranordnung 6 des Kessels 2 umschließt den Kessel 2 abschnittsweise und ist über eine das Kesselvolumen 5 umschließende Kesselwandung 10 mit dem Kesselvolumen 5 in thermodynamische Wirkverbindung gebracht. Die dargestellte Temperieranordnung 6 umschließt ein Temperiervolumen 11 und ist als ein die Kesselwandung 10 spiralförmig umlaufendes Rohr ausgebildet. In Figur 1A ist der Kessel 2 der erfindungsgemäßen Anlage 1 in einem Kochmodus gezeigt, in dem das Temperiervolumen 11 von gesättigtem Dampf 12 bei einem Druck von 3 bar und einer Temperatur von ca. 134° C durchströmt ist. Der Dampf 12 gibt dabei thermische Energie an eine innerhalb des Kesselvolumens 5 angeordnete stärke- und eiweißhaltige Grundzutat 13 und in dem Kesselvolumen 5 angeordnetes Wasser 14 ab, sodass ein Wärmestrom 15 in den Kessel hinein entsteht. Im Ergebnis wird das Wasser 14 zum Sieden gebracht und die Grundzutat 13 in dem Kessel 2 gekocht. Gleichzeitig wird mittels des Kesselrührwerks 7 mechanische Arbeit in das Kesselvolumen 5 eingebracht, sodass die Grundzutat 13 zerkleinert und mit dem Wasser 14 vermengt wird.

Demgegenüber ist in Figur 1B der Kessel 2 der erfindungsgemäßen Anlage 1 in einem Kühlmodus gezeigt, in dem das Temperiervolumen 11 von Kühlwasser 16 bei Normaldruck und mit einer Temperatur von ca. 15° C durchströmt ist. Das Kühlwasser 16 nimmt dabei thermische Energie aus einer pastösen Lebensmittelbasis 17 auf, die zuvor in dem Kessel 2 aus der Grundzutat 13 und dem Wasser 14 hergestellt worden ist. Der Wärmstrom 15 ist bei in den Kühlmodus überführtem Kessel 2 aus dem Kessel 2 heraus gerichtet, sodass die pastöse Lebensmittelbasis 17 kühlbar ist.

Der Kesseleinlassabschnitt 8 des in den Figuren 1A und 1B gezeigten Kessels 2 ist lediglich schematisch dargestellt. Mittels des dargestellten Kesseleinlassabschnitts 8 ist eine chargenweise Befüllung des Kessels 2 mit der Grundzutat 13 und dem Wasser 14 möglich. In dem Kesseleinlassabschnitt 8 ist ein Verschlusselement 18 angeordnet, mittels dessen das Kesselvolumen 5 gasdicht verschlossen ist. Das Verschlusselement 18 ist derart ausgebildet und an den Kesseleinlassabschnitt 8 angepasst, dass in dem Kesselvolumen 5 ein Überdruck eingestellt werden kann, ohne dass das Verschlusselement 8 seine Dichtwirkung verliert.

Der Kesselauslassabschnitt 9 des Kessels 2 ist in einem dem Kesseleinlassabschnitt 8 gegenüberliegenden Bereich des Kessels 2 angeordnet und mündet kesselseitig in einen Kesselsumpf 19. Der Kesselsumpf 19 ist dabei der tiefste Abschnitt des Kesselvolumens 5, in dem sich die Grundzutat 13, das Wasser 14 und die pastöse Lebensmittelbasis 17 unter dem Einfluss der Gravitation an einem Aufstellort des Kessels 2 sammeln.

An den Kesselauslassabschnitt 8 schließt sich ein erster Rohrabschnitt 20 des Rohrleitungssystems 4 an. In dem ersten Rohrabschnitt 20 ist eine Pumpe 21 angeordnet, die zur Förderung der pastösen Lebensmittelbasis 17 geeignet ist. Der erste Rohrabschnitt 20 ist mit einem Mischeinlassabschnitt 22 der Mischvorrichtung 3 verbunden, sodass die Lebensmittelbasis 17 mittels des ersten Rohrabschnitts 20 und der Pumpe 21 von dem Kessel 2 zu der Mischvorrichtung 3 transportierbar ist.

Die Mischvorrichtung 3 weist ein Mischvolumen 23 und ein innerhalb des Mischvolumens 23 angeordnetes Mischrührwerk 24 auf. Mittels des Mischrührwerks 24 ist mechanische Arbeit in das Mischvolumen 23 einbringbar. Bei der in den Figuren 1A und 1B gezeigten Ausführungsform der erfindungsgemäßen Anlage 1 ist das Mischvolumen 23 mit der pastösen Lebensmittelbasis 17 befüllt.

Die Mischvorrichtung 3 weist einen Zutateneinlassabschnitt 25 auf, in dem die erste Ergänzungszutat 26 mittels einer schematisch dargestellten Schleusenanordnung 27 in das Mischvolumen 23 einfüllbar ist. In Figur 1A ist die Ergänzungszutat 26 in einer Schleusenkammer (nicht bezeichnet) der Schleusenanordnung 27 eingefüllt, wobei die Schleusenkammer nach außen hin geöffnet ist. In Figur 1B ist die Schleusenkammer der Schleusenanordnung 27 zu dem Mischvolumen 23 hin geöffnet und die erste Ergänzungszutat ist in das Mischvolumen 23 eingefüllt. Die pastöse Lebensmittelbasis 17 und die erste Ergänzungszutat 26 sind in der Figur 1B in einem unvermischten Zustand gezeigt. Durch einschalten des Mischrührwerks 24 sind die pastöse Lebensmittelbasis 17 und die erste Ergänzungszutat 26 zu dem pastösen Lebensmittel vermengbar.

Die in den Figuren 1A und 1B gezeigte erfindungsgemäße Anlage 1 weist eine Inertgasquelle 28 auf. Die Inertgasquelle 28 ist als ein Gasgenerator ausgebildet, der Stickstoff aus der Umgebungsluft entzieht und den Stickstoff als Inertgas für die erfindungsgemäße Anlage 1 zur Verfügung stellt. Die Anlage 1 weist auch Inertgasleitungen 29 und Inertgasflusssteuerelemente 30 auf, die ein Inertgasverteilsystem (nicht bezeichnet) bilden. Die Inertgasflusssteuerelemente 30 sind als Zwei-Wege-Ventile ausgebildet, mittels derer die Inertgasleitungen 29 abschnittsweise verschließbar sind. Die Inertgasleigungen 29 münden bei der gezeigten Anlage in dem Kesselvolumen 5 und in dem Mischvolumen 23, sodass das Inertgas in diese Volumina 5, 23 direkt einleitbar ist. Ein erstes Rohrvolumen 31 des ersten Rohrabschnitts 20 ist indirekt durch das Kesselvolumen 5 und das Mischvolumen 23 mit dem Inertgas befüllbar.

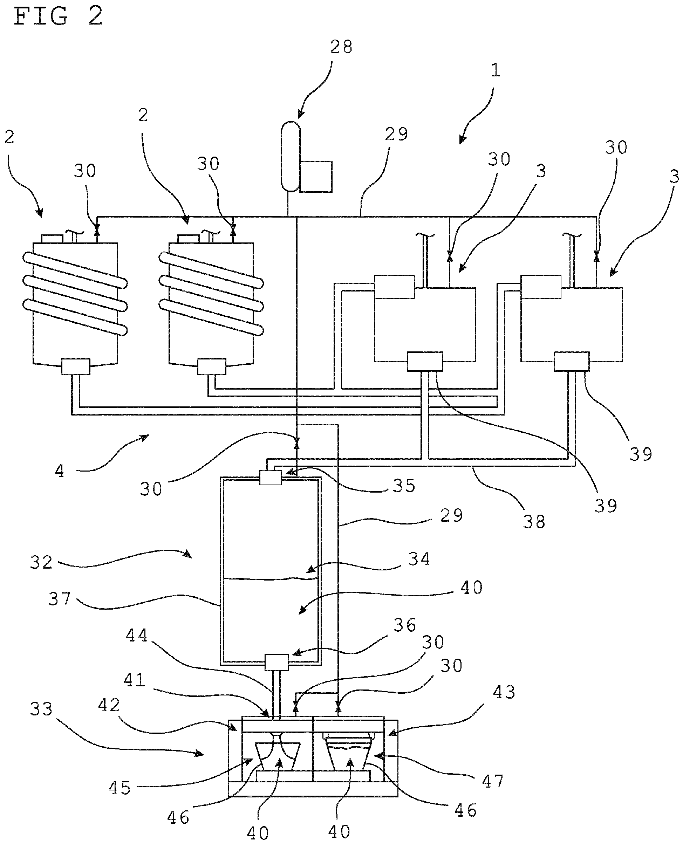

In Figur 2 ist eine schematisch dargestellte Ansicht einer weiteren Ausführungsform der erfindungsgemäßen Anlage 1. gezeigt, die neben zwei Kesseln 2, zwei Mischvorrichtungen 3, dem Rohrleitungssystem 4, der Inertgasquelle 28, den Inertgasleitungen 29 und den Inertgasflusssteuerelementen 30 auch einen Speicherbehälter 32 und eine Abfüllvorrichtung 33 aufweist.

Jeder der Speicherbehälter 32 weist ein Speichervolumen 34, einen Speichereinlassabschnitt 35 und einem Speicherauslassabschnitt 36. Das Speichervolumen 34 ist von einer Speicherwandung 37 umschlossen. Der Speichereinlassabschnitt 35 ist mittels eines dritten Rohrabschnitts 38 des Rohrleitungssystems 4 mit einem Mischauslassabschnitt 39 der Mischvorrichtung 3 verbunden. Durch den dritten Rohrabschnitt 38 hindurch ist das pastöse Lebensmittel 40 in das Speichervolumen 34 des jeweiligen Speicherbehälters 32 pumpbar. Die Speichervolumen 34 der in Figur 2 gezeigten Speicherbehälter 32 sind jeweils zur Hälfte mit dem pastösen Lebensmittel 40 gefüllt.

Im Bereich des Speichereinlassabschnitts 35 ist eine Inertgasleitung 29 an den Speicherbehälter 32 angeschlossen, die in dem Speichervolumen 34 mündet. Mittels der Inertgasleitung 29 ist das Speichervolumen 34 mit der Inertgasquelle 28 in Wirkverbindung gebracht, sodass das Speichervolumen 34 mit dem Inertgas befüllbar ist.

Die Abfüllvorrichtung 33 der in Figur 2 gezeigten Anlage 1 weist einen Abfülleinlassabschnitt 41, eine Abfüllanordnung 42 und eine Versiegelungsanordnung 43 auf. Der Abfülleinlassabschnitt 41 der Abfüllvorrichtung 33 ist mittels zweier vierter Rohrabschnitte 44 des Rohrleitungssystems 4 mit den Speicherauslassabschnitten 36 der Speicherbehälter 32 verbunden, sodass das pastöse Lebensmittel 40 von den Speicherbehältern 32 zu der Abfüllvorrichtung 33 transportierbar ist.

Die Abfüllvorrichtung 33 weist ein Abfüllarbeitsvolumen 45 auf, das die Abfüllanordnung 42 abschnittsweise umschließt. Innerhalb des Abfüllarbeitsvolumens 45 ist ein schematisch dargestellter Lebensmittelbehälter 46 angeordnet, der mit dem pastösen Lebensmittel 40 befüllt ist. Das Abfüllarbeitsvolumen 45 ist mittels einer Inertgasleitung 29 mit der Inertgasquelle 28 verbunden und mit dem Inertgas befüllt.

Die Abfüllvorrichtung 33 der in Figur 2 gezeigten Anlage 1 weist auch ein Versiegelungsarbeitsvolumen 47 auf, das die Versiegelungsanordnung 43 abschnittsweise umschließt. Innerhalb des Versiegelungsarbeitsvolumens 47 ist ein mit dem pastösen Lebensmittel 40 befüllter Lebensmittelbehälter 46 angeordnet. Der gezeigte Lebensmittelbehälter 46 wurde bereits mittels der Versiegelungsanordnung 43 verschlossen. Das Versiegelungsarbeitsvolumen 47 ist mittels einer Inertgasleitung 29 mit der Inertgasquelle 28 verbunden und mit dem Inertgas befüllt.

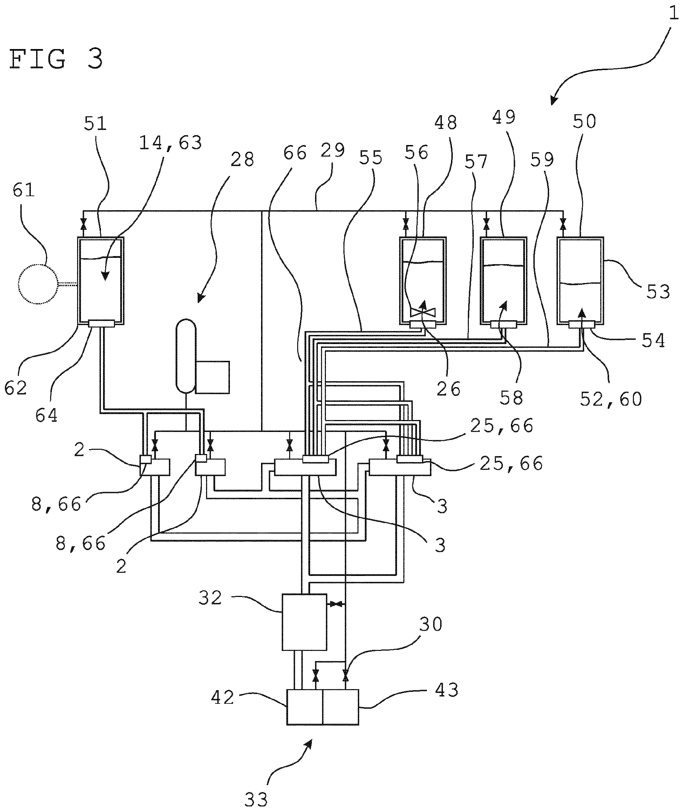

Die in Figur 3 gezeigte Ausführungsform der erfindungsgemäßen Anlage 1 weist, anders als die in den Figuren 1A bis 2 gezeigten Ausführungsformen, einen ersten Ergänzungszutatenbehälter 48, einen zweiten Ergänzungszutatenbehälter 49, einen dritten Ergänzungszutatenbehälter 50 und einen Wasservorratsbehälter 51 auf. Die Kessel 2, die Mischvorrichtungen 3, der Speicherbehälter 32 und die Abfüllvorrichtung 33 sind in Figur 3 lediglich schematisch dargestellt.

Die Ergänzungszutatenbehälter 48, 49, 50 weisen jeweils ein Zutatenvolumen 52, das von einer Zutatenbehälterwandung 53 umschlossen ist, sowie einen Zutatenauslassabschnitt 54 auf. Der Zutatenauslassabschnitt 54 des ersten Ergänzungszutatenbehälters 48 ist mittels eines ersten Zutatenrohrabschnitts 55 mit dem Zutateneinlassabschnitt 25 der Mischvorrichtung 3 verbunden, wobei in dem ersten Ergänzungszutatenbehälter die erste Ergänzungszutat 26 gelagert ist. Der Zutatenauslassabschnitt 54 des zweiten Ergänzungszutatenbehälters 49 ist mittels eines zweiten Zutatenrohrabschnitt 57 mit dem Zutateneinlassabschnitt 25 der Mischvorrichtung 3 verbunden, wobei in dem zweiten Ergänzungszutatenbehälter 49 die zweite Ergänzungszutat 58 gelagert ist. Der dritte Ergänzungszutatenbehälter 50 ist mittels eines dritten Zutatenrohrabschnitts 59 mit dem Zutateneinlassabschnitt 25 verbunden, wobei in dem dritten Ergänzungszutatenbehälter 50 eine dritte Ergänzungszutat 60 gelagert ist.

Die Zutatenvolumina 52 der Ergänzungszutatenbehälter 48, 49, 50 sind jeweils mittels einer der Inertgasleitungen 29 mit der Inertgasquelle 28 in Wirkverbindung gebracht und mit dem Inertgas aufgefüllt.

Die erste Ergänzungszutaten 26, 58, 60 sind mittels der Zutatenrohrabschnitte 55, 57, 59 von den Ergänzungszutatenbehälter 48, 49, 50 zu der Mischvorrichtung 3 transportierbar. Dadurch, dass die Zutatenvolumina 52 mit dem Inertgas befüllt sind, sind die Ergänzungszutaten 26, 58, 60 ohne Sauerstoff- und Umgebungsluftkontakt lagerbar.

Der Wasservorratsbehälter 51, der in Figur 3 gezeigte Anlage 1 ist mit einer Frischwasserquelle 61 verbunden. Durch die Lagerung des Wassers 14 in dem mit dem Inertgas aufgefüllten Wasservolumen 63 des Wasservorratsbehälters 51 findet ein Austausch der in dem Wasser 14 gelösten Gase gegen das Inertgas statt. Der Wasservorratsbehälter 51 weist ein von einer Wasserbehälterwandung 62 umschlossenes Wasservolumen 63 sowie einen Wasserauslassabschnitt 64 auf. Der Wasserauslassabschnitt 64 ist mittels eines sechsten Rohrabschnitts 65 der Rohrleitungsanordnung 4 mit dem Zutateneinlassabschnitt 25 der Mischvorrichtung 3 verbunden. Innerhalb des Wasservolumens 63 ist Wasser 14 gelagert. Das Wasservolumen 63 ist mittels einer der Inertgasleitungen 29 mit der Inertgasquelle 28 in Wirkverbindung gebracht und mit dem Inertgas aufgefüllt.

Das Wasser 14 ist mittels des sechsten Rohrabschnitts 65 von dem Wasservorratsbehälter 51 zu den Kesseln 2 transportierbar. Dadurch, dass das Wasservolumen 63 mit dem Inertgas aufgefüllt ist, wird das Wasser 14 innerhalb des Wasservolumens ohne Sauerstoff- und Umgebungsluftkontakt gelagert.

Die in Figur 3 gezeigte Anlage 1 ist zu Herstellung von Hummus eingerichtet. Die Grundzutat 13 zur Herstellung der pastösen Lebensmittelbasis 17 bilden Kichererbsen. Die erste Ergänzungszutat 26 ist Tahini. Aufgrund der hohen Viskosität des Tahini weist der erste Ergänzungszutatenbehälter 48 ein lediglich schematisch dargestelltes Ergänzungszutatenrührwerk 56 auf, mittels dessen die als Tahini ausgebildete erste Ergänzungszutat 26 zu dem Zutatenauslassabschnitt 54 des ersten Ergänzungszutatenbehälters 48 förderbar ist. Die zweite Ergänzungszutat 58 ist ein Speiseöl. Die dritte Ergänzungszutat 60 ist ein Säuerungsmittel.

Die Anlage 1 weist auch Abmessanordnungen 66 auf, die in den Kesseleinlassabschnitten 8 und in den Zutateneinlassabschnitten 25 angeordnet sind, um die Menge an Wasser 14 und Ergänzungszutaten 26, 58, 60 bestimmen zu können, die in die Kessel 2 und die Mischvorrichtungen 3 eingeleitet wird.

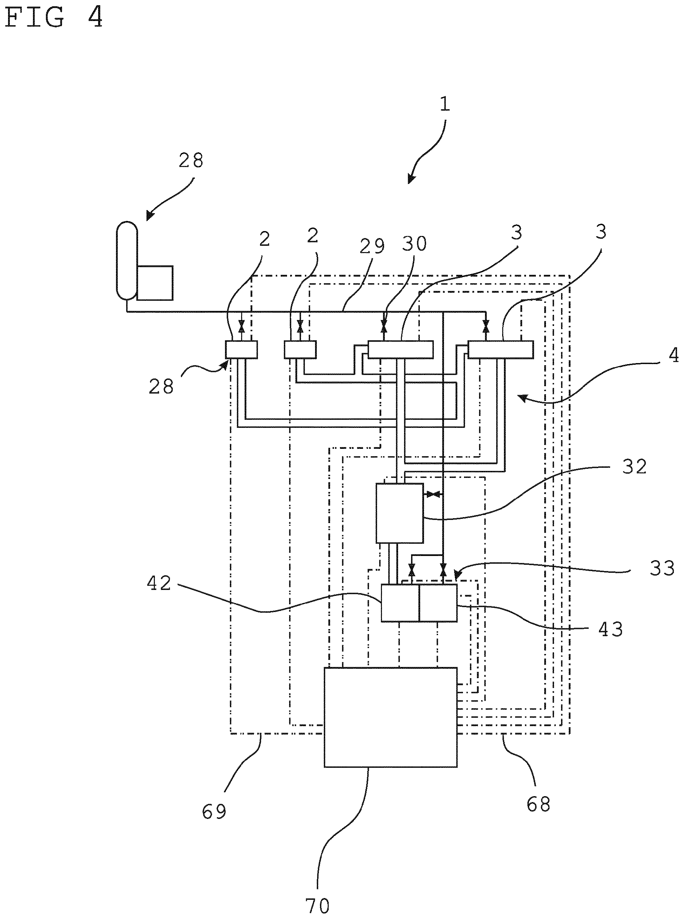

In Figur 4 ist eine Ausführungsform der erfindungsgemäßen Anlage 1 gezeigt, die eine Spülreinigungseinrichtung 67 aufweist. Die Spülreinigungseinrichtung 67 weist Spülleitungen 68 (dargestellt durch Strich-Punkt-Linien), Rücklaufleitungen 69 (dargestellt durch Strich-Zwei-Punkt-Linien) und eine Reinigungseinheit 70 auf. Es ist jeweils lediglich eine der Spülleitungen 68 und eine der Rücklaufleitungen bezeichnet. Die Spülreinigungseinrichtung 67 ist lediglich schematisch dargestellt und es sind lediglich diejenigen Spülleitungen 68 und Rücklaufleitungen 69 gezeigt, mittels derer eine Reinigungsflüssigkeit in die Kessel 2, die Mischvorrichtungen 3, den Speicherbehälter 32 und die Abfüllvorrichtung 33 ein- und ausleitbar ist. Die Ergänzungszutatenbehälter der Wasservorratsbehälter sowie die jeweils zugehörigen Rohrabschnitte und Zutatenrohrabschnitte sind nicht dargestellt.

Nachfolgend wird die Funktionsweise der Spülreinigungseinrichtung 67 am Beispiel eines der Kessel 2 beispielhaft erklärt. Die Reinigung der anderen Geräte erfolgt sinngemäß ähnlich. Die Reinigungsflüssigkeit wird von der Reinigungseinheit 70 mittels der zu dem Kessel 2 führenden Spülleitung 68 in den Kessel 2 gepumpt. Verunreinigungen innerhalb des Kessels 2 werden von der Reinigungsflüssigkeit gelöst und/ oder mit der Reinigungsflüssigkeit fortgespült. Die Rücklaufleitung 69 ist mit dem Kesselsumpfs 19 des Kessels 2 in Wirkverbindung gebracht und die verunreinigte Reinigungsflüssigkeit wird mittels der Rücklaufleitung 69 zurück zu der Reinigungseinheit 70 transportiert.

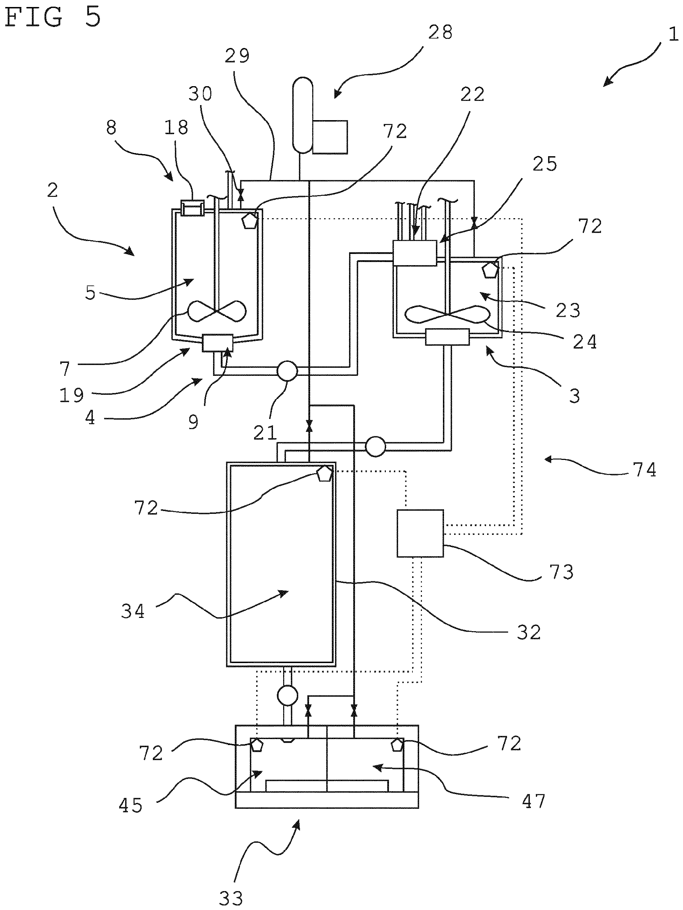

In Figur 5 ist eine schematische Darstellung einer Ausführungsform der erfindungsgemäßen Anlage 1 gezeigt, die einen Kessel 2, eine Mischvorrichtung 3, einen Speicherbehälter 32, eine Abfüllvorrichtung 33 sowie eine Überwachungseinrichtung 71 aufweist. Die Ergänzungszutatenbehälter und der Wasserbehälter sind in der Figur 5 nicht dargestellt. Die Überwachungseinrichtung 71 weist fünf Sensorelemente 72 und eine Auswerteanordnung 73 auf. Jeweils eines der Sensorelemente 72 ist mit dem Kesselvolumen 5, dem Mischvolumen 23, dem Speichervolumen 34, dem Abfüllarbeitsvolumen 45 und dem Versiegelungsarbeitsvolumen 47 in Wirkverbindung gebracht. Die Sensorelemente 72 sind signalleitend (dargestellt durch gepunktete Linien) mit der Auswerteanordnung 73 in Wirkverbindung gebracht und als Gassensoren ausgebildet, mittels derer die Konzentration von Sauerstoff innerhalb der Volumina 5, 23, 34, 45 bestimmbar ist. Auf der Auswerteanordnung 73 ist eine Regel (weder dargestellt noch bezeichnet) hinterlegt, mittels der auf der Grundlage von durch die Sensorelemente 72 generierten Sensorsignalen bestimmbar ist, ob ein ausreichender Anteil Inertgas in die Volumina 5, 23, 34, 45 eingebracht ist, um einem Verderben des Lebensmittels entgegenzuwirken.

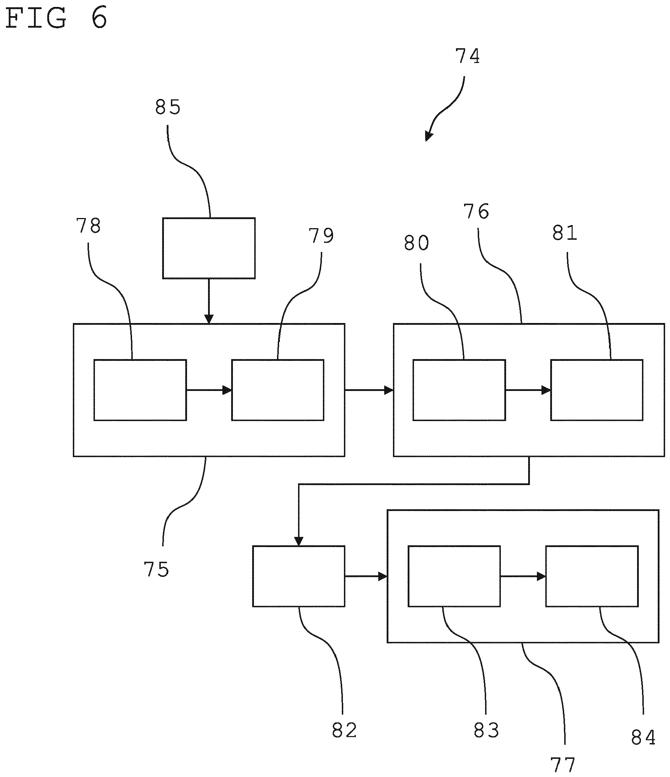

In Figur 6 ist eine schematische Darstellung eines Verfahrens 74 zur Herstellung des pastösen Lebensmittels mittels einer der zuvor beschriebenen Anlagen gezeigt. Das Verfahren 74 weist einen Zerkochvorgang 75, einen Mischvorgang 76 und einen Verpackungsvorgang 77 auf.

In dem Zerkochvorgang 75 wird zunächst in einem Einweichschritt 78 die Grundzutat zusammen mit dem Wasser und unter Zufuhr von Wärme eingeweicht. In einem auf den Einweichschritt 78 folgenden Kochschritt 79 des Zerkochvorgangs 75 wird die in dem Einweichschritt 78 eingeweichte Grundzutat unter Zufuhr von Wärme und mechanischer Arbeit zu der pastösen Lebensmittelbasis verarbeitet.

Auf den Zerkochvorgang 75 folgt der Mischvorgang 76. In dem Mischvorgang 76 wird aus der pastösen Lebensmittelbasis und den Ergänzungszutaten mittels der Mischvorrichtung das pastöse Lebensmittel hergestellt. Der Mischvorgang 76 weist einen Einfüllschritt 80 und einen auf den Einfüllschritt 80 folgenden Vermengungsschritt 81 auf. In dem Einfüllschritt 80 werden die pastöse Lebensmittelbasis und die Ergänzungszutaten in das Mischvolumen eingefüllt. In dem sich anschließenden Vermengungsschritt 81 werden die pastöse Lebensmittelbasis und die Ergänzungszutaten mittels des Mischrührwerks miteinander vermengt und so das pastöse Lebensmittel hergestellt.

Das gezeigte Verfahren 1 weist auch einen auf den Mischvorgang 76 folgenden Zwischenspeicherungsschritt 82 auf, in dem das pastöse Lebensmittel aus der Mischvorrichtung in das Speichervolumen des Speicherbehälters transportiert wird. Der Zwischenspeicherungsschritt 82 dient dabei insbesondere dazu, die chargenweise Bereitstellung von pastösem Lebensmittel durch die Mischvorrichtung zu glätten und für den auf den Zwischenspeicherungsschritt 82 folgenden Verpackungsvorgang 77 einen konstanten Massenstrom von pastösem Lebensmittel bereitzustellen.

Der auf den Zwischenspeicherungsschritt 82 folgende Verpackungsvorgang 77 weist einen Abfüllschritt 83 und einen Versiegelungsschritt 84 auf. In dem Abfüllschritt 83 wird das pastöse Lebensmittel zunächst von dem Speicherbehälter zu der Abfüllvorrichtung geleitet und anschließend mittels der Abfüllanordnung der Abfüllvorrichtung innerhalb des Abfüllarbeitsvolumens in die Lebensmittelbehälter abgefüllt.

in dem Versiegelungsschritt 84, der sich an den Abfüllschritt 83 anschließt, wird der befüllte Lebensmittelbehälter mittels der Versiegelungsanordnung der Abfüllvorrichtung verschlossen und versiegelt.

Das in Figur 6 gezeigte Verfahren weist auch einen Inertgaseinleitungsschritt 85 auf. Der Inertgaseinleitungsschritt 85 erfolgt bei der dargestellten Ausführungsform des erfindungsgemäßen Verfahrens 74 einmalig vor dem Zerkochvorgang 75. In dem Inertgaseinleitungsschritt 85 werden das Kesselvolumen, das Mischvolumen, das Speichervolumen, das Abfüllarbeitsvolumen und das Versiegelungsarbeitsvolumen mit dem Inertgas aufgefüllt, sodass Sauerstoff und Umgebungsluft aus den Volumina verdrängt werden.

In den Darstellungen der Figuren 1A bis 5 sind teilweise jeweils einzelne mehrerer gleichartiger Elemente exemplarisch mit einem Bezugszeichen gekennzeichnet.

### BEZUGSZEICHENLISTE

- 1.: Anlage
- 2.: Kessel
- 3.: Mischvorrichtung
- 4.: Rohrleitungssystem
- 5.: Kesselvolumen
- 6.: Temperieranordnung
- 7.: Kesselrührwerk
- 8.: Kesseleinlassabschnitt
- 9.: Kesselauslassabschnitt
- 10.: Kesselwandung
- 11.: Temperiervolumen
- 12.: Dampf
- 13.: Grundzutat
- 14.: Wasser
- 15.: Wärmestrom
- 16.: Kühlwasser
- 17.: pastöse Lebensmittelbasis
- 18.: Verschlusselement
- 19.: Kesselsumpf
- 20.: erster Rohrabschnitt
- 21.: Pumpe
- 22.: Mischeinlassabschnitt
- 23.: Mischvolumen
- 24.: Mischrührwerk
- 25.: Zutateneinlassabschnitt
- 26.: erste Ergänzungszutat
- 27.: Schleusenanordnung
- 28.: Inertgasquelle
- 29.: Inertgasleitung
- 30.: Inertgasflusssteuerelement
- 31.: erstes Rohrvolumen
- 32.: Speicherbehälter
- 33.: Abfüllvorrichtung
- 34.: Speichervolumen
- 35.: Speichereinlassabschnitt
- 36.: Speicherauslassabschnitt
- 37.: Speicherwandung
- 38.: dritter Rohrabschnitt
- 39.: Mischauslassabschnitt
- 40.: pastöses Lebensmittel
- 41.: Abfülleinlassabschnitt
- 42.: Abfüllanordnung
- 43.: Versiegelungsanordnung
- 44.: vierter Rohrabschnitt
- 45.: Abfüllarbeitsvolumen
- 46.: Lebensmittelbehälter
- 47.: Versiegelungsarbeitsvolumen
- 48.: erster Ergänzungszutatenbehälter
- 49.: zweiter Ergänzungszutatenbehälter
- 50.: dritter Ergänzungszutatenbehälter
- 51.: Wasservorratsbehälter
- 52.: Zutatenvolumen
- 53.: Zutatenbehälterwandung
- 54.: Zutatenauslassabschnitt
- 55.: erster Zutatenrohrabschnitt
- 56.: Ergänzungszutatenrührwerk
- 57.: zweiter Zutatenrohrabschnitt
- 58.: zweite Ergänzungszutat
- 59.: dritter Zutatenrohrabschnitt
- 60.: dritte Ergänzungszutat
- 61.: Frischwasserquelle
- 62.: Wasserbehälterwandung
- 63.: Wasservolumen
- 64.: Wasserauslassabschnitt
- 65.: sechster Rohrabschnitt
- 66.: Abmessanordnung
- 67.: Spülreinigungseinrichtung
- 68.: Spülleitungen
- 69.: Rücklaufleitungen
- 70.: Reinigungseinheit
- 71.: Überwachungseinrichtung
- 72.: Sensorelement
- 73.: Auswerteanordnung
- 74.: Verfahren
- 75.: Zerkochvorgang
- 76.: Mischvorgang
- 77.: Verpackungsvorgang
- 78.: Einweichschritt
- 79.: Kochschritt
- 80.: Einfüllschritt
- 81.: Vermengungsschritt
- 82.: Zwischenspeicherungsschritt
- 83.: Abfüllschritt
- 84.: Versiegelungsschritt
- 85.: Inertgaseinleitungsschritt

## Patentansprüche

1. Anlage (1) zur Herstellung eines pastösen Lebensmittels (40) aus einer stärke- und/ oder eiweißhaltigen Grundzutat (13), zumindest einer ersten Ergänzungszutat (26) und Wasser (14), wobei die Anlage (1) einen Kessel (2), eine Mischvorrichtung (3) und ein Rohrleitungssystem (4) aufweist, wobei der Kessel (2) ein Kesselvolumen (5), eine mit dem Kesselvolumen (5) in Wirkverbindung gebrachte und/ oder bringbare Temperieranordnung (6), ein zumindest abschnittsweise innerhalb des Kesselvolumens (5) angeordnetes Kesselrührwerk (7) und einen Kesseleinlassabschnitt (8) aufweist, wobei durch die Temperieranordnung (6) ein Wärmestrom (15) in das Kesselvolumen (5) hinein und/ oder aus dem Kesselvolumen (5) heraus erzeugbar ist, wobei durch den Kesseleinlassabschnitt (8) zumindest die Grundzutat (13) und das Wasser (14) in das Kesselvolumen (5) einfüllbar sind und wobei mittels des Kesselrührwerks (7) mechanische Arbeit auf die in dem Kesselvolumen (5) angeordneten Zutaten (13, 14) übertragbar ist, sodass mittels des Kessels (2) die Grundzutat (13) zu einer pastösen Lebensmittelbasis (17) verarbeitbar ist, wobei der Kessel (2) einen mit dem Kesselvolumen (5) verbundenen und/ oder verbindbaren Kesselauslassabschnitt (9) aufweist, wobei der Kesselauslassabschnitt (9) mittels eines ersten Rohrabschnitts (20) des Rohrleitungssystems (4) mit einem Mischeinlassabschnitt (22) der Mischvorrichtung (3) verbunden und/ oder verbindbar ist, sodass die Lebensmittelbasis (17) mittels des ersten Rohrabschnitts (20) von dem Kessel (2) zu der Mischvorrichtung (3) transportierbar ist, wobei die Mischvorrichtung (3) ein Mischvolumen (23) und ein innerhalb des Mischvolumens (23) angeordnetes Mischrührwerk (24) aufweist und wobei die Mischvorrichtung (3) zumindest einen Zutateneinlassabschnitt (25) aufweist, durch den zumindest die erste Ergänzungszutat (26) in das Mischvolumen (23) einleitbar ist, sodass mittels der Mischvorrichtung (3) das pastöse Lebensmittel (40) herstellbar ist, **dadurch gekennzeichnet, dass** die Anlage (1) mit einer Inertgasquelle (28) in Wirkverbindung gebracht und/ oder bringbar ist und/ oder die Inertgasquelle (28) aufweist, wobei durch die Inertgasquelle (28) ein Inertgas bereitstellbar ist, wobei das Kesselvolumen (5), das Mischvolumen (23) und alle Rohrvolumina (31) des Rohrleitungssystems (4) derart gasleitend mit der Inertgasquelle (28) verbunden und/ oder verbindbar sind, dass die Volumina (5, 23, 31) mit dem Inertgas be- und/ oder auffüllbar sind, sodass eine Kontaktierung der Lebensmittelbasis (17) und des Lebensmittels (40) mit Sauerstoff und/ oder einer Umgebungsluft verhinderbar ist.

2. Anlage (1) nach Anspruch 1, **dadurch gekennzeichnet, dass** die Anlage (1) ein Inertgasverteilsystem mit Inertgasleitungen (29) und Inertgasflusssteuerelementen (30) aufweist, wobei das Inertgas mittels des Inertgasverteilsystems zumindest mittelbar von der Inertgasquelle (28) in die Volumina (5, 23, 31) der Anlage (1) einleitbar ist.

3. Anlage (1) nach einem der Ansprüche 1 oder 2, **dadurch gekennzeichnet, dass** die Anlage (1) derart ausgebildet ist, dass als Inertgas Stickstoff verwendbar ist.

4. Anlage (1) nach Anspruch 3, **dadurch gekennzeichnet, dass** die Inertgasquelle (28) einen Gasgenerator aufweist, wobei mittels des Gasgenerators das Inertgas aus der Umgebungsluft extrahierbar ist.

5. Anlage (1) nach einem der Ansprüche 1 bis 4, **dadurch gekennzeichnet, dass** die Anlage (1) zumindest zwei Kessel (2) und/ oder zumindest zwei Mischvorrichtungen (3) aufweist.

6. Anlage (1) nach einem der Ansprüche 1 bis 5, **dadurch gekennzeichnet, dass** die Anlage (1) zumindest einen Speicherbehälter (32) mit einem Speichervolumen (34), einem Speichereinlassabschnitt (35) und einem Speicherauslassabschnitt (36) aufweist, wobei der Speichereinlassabschnitt (35) mittels eines dritten Rohrabschnitts (38) des Rohrleitungssystems (4) mit einem Mischauslassabschnitt (39) der Mischvorrichtung (3) verbunden und/ oder verbindbar ist und wobei das Speichervolumen (34) derart mit der Inertgasquelle (28) in Wirkverbindung gebracht und/ oder bringbar ist, dass das Speichervolumen (34) mit dem Inertgas be- und/ oder auffüllbar ist, sodass das Lebensmittel (40) mittels des dritten Rohrabschnitts (38) von der Mischvorrichtung (3) zu dem Speicherbehälter (32) transportierbar und in dem Speichervolumen (34) ohne Sauerstoff- und Umgebungsluftkontakt lagerbar ist.

7. Anlage (1) nach einem der Ansprüche 1 bis 6, **dadurch gekennzeichnet, dass** die Anlage (1) zumindest eine Abfüllvorrichtung (33) mit einem Abfülleinlassabschnitt (41), einer Abfüllanordnung (42) und einer Versiegelungsanordnung (43) aufweist, wobei der Abfülleinlassabschnitt (41) mittels eines vierten Rohrabschnitts (44) des Rohrleitungssystems (4) mit einem Speicherauslassabschnitt (36) des Speicherbehälters (32) und/ oder mittels eines fünften Rohrabschnitts mit dem Mischauslassabschnitt (39) der Mischvorrichtung (3) verbunden und/ oder verbindbar ist, sodass das Lebensmittel (40) mittels des vierten Rohrabschnitts (44) von dem Speicherbehälter (32) und/ oder mittels des fünften Rohrabschnitts von der Mischvorrichtung (3) zu der Abfüllvorrichtung (33) transportierbar ist, wobei das Lebensmittel (40) mittels der Abfüllanordnung (42) innerhalb eines Abfüllarbeitsvolumens (45) in Abfüllarbeitsvolumens (46) abfüllbar ist, wobei die Abfüllarbeitsvolumens (46) innerhalb eines Versiegelungsarbeitsvolumen (47) mittels der Versiegelungsanordnung (43) verschließ- und versiegelbar sind und wobei der Abfülleinlassabschnitt (41) sowie alle Arbeitsvolumina (46, 47) der Abfüllvorrichtung (33) derart zumindest mittelbar mit der Inertgasquelle (28) in Wirkverbindung gebracht und/ oder bringbar sind, dass das Lebensmittel (40) ohne Umgebungsluft- und Sauerstoffkontakt abfüllbar ist.

8. Anlage (1) nach einem der Ansprüche 1 bis 7, **dadurch gekennzeichnet, dass** die Anlage (1) zumindest einen Ergänzungszutatenbehälter (48, 49, 50) aufweist, wobei der Ergänzungszutatenbehälter (48, 49, 50) ein Zutatenvolumen (52) und einen Zutatenauslassabschnitt (54) aufweist, wobei der Zutatenauslassabschnitt (54) mittels eines Zutatenrohrabschnitts (55, 57, 59) des Rohrleitungssystems (4) mit dem Zutateneinlassabschnitt (25) der Mischvorrichtung (3) verbunden ist, wobei in dem Zutatenvolumen (52) die erste Ergänzungszutat (26) und/ oder eine weitere Ergänzungszutat (58, 60) lagerbar ist, wobei das Zutatenvolumen (52) derart mit der Inertgasquelle (28) in Wirkverbindung gebracht und/ oder bringbar ist, dass das Zutatenvolumen (52) mit dem Inertgas be- und/ oder auffüllbar ist, sodass die erste Ergänzungszutat (26) und/ oder die weitere Ergänzungszutat (58, 60) mittels des Zutatenrohrabschnitts (55, 57, 59) von dem Ergänzungszutatenbehälter (48, 49, 50) zu der Mischvorrichtung (3) transportierbar und in dem Zutatenvolumen (52) ohne Sauerstoff- und Umgebungsluftkontakt lagerbar sind.

9. Anlage (1) nach einem der Ansprüche 1 bis 8, **dadurch gekennzeichnet, dass** die Anlage (1) zumindest einen Wasservorratsbehälter (51) aufweist, wobei der Wasservorratsbehälter (51) ein Wasservolumen (63) und einen Wasserauslassabschnitt (64) aufweist, wobei der Wasserauslassabschnitt (64) mittels eines sechsten Rohrabschnitts (65) des Rohrleitungssystems (4) mit dem Zutateneinlassabschnitt (25) der Mischvorrichtung (3) und/ oder mittels eines siebten Rohrabschnitts mit dem Kesseleinlassabschnitt (8) des Kessels (2) verbunden ist, wobei in dem Wasservolumen (63) das Wasser (14) lagerbar ist, wobei das Wasservolumen (63) derart mit der Inertgasquelle (28) in Wirkverbindung gebracht und/ oder bringbar ist, dass das Zutatenvolumen (52) mit dem Inertgas be- und/ oder auffüllbar ist, sodass das Wasser (14) mittels des sechsten Rohrabschnitts (65) von dem Wasservorratsbehälter (51) zu der Mischvorrichtung (3) und/ oder mittels des siebten Rohrabschnitts zu dem Kessel (2) transportierbar und in dem Wasservolumen (63) ohne Sauerstoff- und Umgebungsluftkontakt lagerbar ist.

10. Anlage (1) nach einem der Ansprüche 8 oder 9, **dadurch gekennzeichnet, dass** die Anlage (1) zur Herstellung von Hummus eingerichtet ist, wobei die Grundzutat (13) Kichererbsen und/ oder Bohnen sind, wobei die Kichererbsen und/ oder Bohnen mittels des Kessels (2) zu der Grundzutat (13) verarbeitbar sind, wobei die erste Ergänzungszutat (26) Tahini und/ oder eine vergleichbare Sesampaste ist, wobei die Anlage (1) einen ersten Ergänzungszutatenbehälter (48) aufweist, in dem die erste Ergänzungszutat (26) lagerbar ist, wobei die Anlage (1) einen zweiten Ergänzungszutatenbehälter (49) aufweist, in dem eine zweite Ergänzungszutat (58) lagerbar ist, wobei die zweite Ergänzungszutat ein (58) Speiseöl ist, wobei die Anlage (1) einen dritten Ergänzungszutatenbehälter (50) aufweist, in dem eine dritte Ergänzungszutat (60) lagerbar ist, wobei die dritte Ergänzungszutat (60) ein Säuerungsmittel ist, wobei der erste Ergänzungszutatenbehälter (48) mit einem ersten Zutatenrohrabschnitt (55), der zweite Ergänzungszutatenbehälter (49) mit einem zweiten Zutatenrohrabschnitt (57) und der dritte Ergänzungszutatenbehälter (50) mit einem dritten Zutatenrohrabschnitt (59) mit dem Zutateneinlassabschnitt (25) der Mischvorrichtung (3) verbunden sind, sodass mittels der Zutatenrohrabschnitte (55, 57, 59) die Ergänzungszutaten (26, 58, 60) in das Mischvolumen (23) einleitbar sind.

11. Anlage (1) nach einem der Ansprüche 1 bis 10, **dadurch gekennzeichnet, dass** die Anlage (1) eine Spülreinigungseinrichtung (67) aufweist, mittels der zumindest der Kessel (2) und die Mischvorrichtung (3) reinigbar sind.

12. Anlage (1) nach einem der Ansprüche 1 bis 11, **dadurch gekennzeichnet, dass** die Anlage (1) eine Überwachungseinrichtung (71) aufweist, wobei die Überwachungseinrichtung (71) zumindest ein Sensorelement (72) und zumindest eine Auswerteanordnung (73) aufweist, wobei das Sensorelements (72) und die Auswerteanordnung (73) derart aneinander angepasst und mit zumindest einem Volumen (5, 23, 31, 34, 45, 47, 52, 63) der Anlage (1) in Wirkverbindung gebracht sind, dass mittels der Überwachungseinrichtung (71) bestimmbar ist, ob ein Inertgasanteil innerhalb des zumindest einen Volumens (5, 23, 31, 34, 45, 47, 52, 63) der Anlage (1) ausreichend ist um einem Verderben des Lebensmittels (40) entgegenzuwirken.

13. Verfahren (74) zur Herstellung eines pastösen Lebensmittels (40) mittels einer Anlage (1) gemäß einem der Ansprüche 1 bis 12, wobei zunächst in einem Zerkochvorgang (75) aus der Grundzutat (13) die pastöse Lebensmittelbasis (17) hergestellt wird, wobei der Zerkochvorgang (75) einen Einweichschritt (78) und einen auf den Einweichschritt (78) folgenden Kochschritt (79) aufweist, wobei die Grundzutat (13) in dem Einweichschritt (78) zusammen mit dem Wasser (14) und unter Zufuhr von Wärme mittels der Temperieranordnung (6) eingeweicht wird, wobei die in dem Einweichschritt (78) eingeweichte Grundzutat (13) in dem Kochschritt (79) unter Zufuhr von Wärme mittels der Temperieranordnung (6) und unter Zufuhr mechanischer Arbeit mittels des Kesselrührwerks (7) zu der pastösen Lebensmittelbasis (17) verarbeitet wird, wobei in einem auf den Zerkochvorgang (75) folgenden Mischvorgang (76) aus der pastösen Lebensmittelbasis (17) und der zumindest einen Ergänzungszutat mittels der Mischvorrichtung (3) das pastöse Lebensmittel (40) hergestellt wird, wobei der Mischvorgang (76) einen Einfüllschritt (80) und einen auf den Einfüllschritt (80) folgenden Vermengungsschritt (81) aufweist, wobei in dem Einfüllschritt (80) die pastöse Lebensmittelbasis (17) und die zumindest eine Ergänzungszutat (26, 58, 60) in das Mischvolumen (23) eingefüllt werden, wobei in dem Vermengungsschritt (81) die pastöse Lebensmittelbasis (17) und die zumindest eine Ergänzungszutat (26, 58, 60) mittels des Mischrührwerks (24) miteinander vermengt werden sodass das pastöse Lebensmittel (40) entsteht, wobei das Kesselvolumen (5) und das Mischvolumen (23) in einem vor dem Zerkochvorgang (75) erfolgenden Inertgaseinleitungsschritt (85) mit dem Inertgas be- oder aufgefüllt werden und während des Zerkochvorgangs (75) sowie während des Mischvorgangs (76) so mit der Inertgasquelle (28) in Wirkverbindung gebracht werden, dass eine Kontaktierung der Lebensmittelbasis (17) und des Lebensmittels (40) mit Sauerstoff und/ oder der Umgebungsluft verhindert wird.

14. Verfahren (74) nach Anspruch 13, **dadurch gekennzeichnet, dass** das Verfahren (74) mittels einer Anlage (1) gemäß einem der Ansprüche 6 bis 12 durchgeführt wird, wobei auf den Mischvorgang (76) ein Zwischenspeicherungsschritt (82) folgt, in dem das pastöse Lebensmittel (40) von der Mischvorrichtung (3) in den Speicherbehälter (32) geleitet wird, wobei das Speichervolumen (34) in dem Inertgaseinleitungsschritt (85) mit dem Inertgas be- oder aufgefüllt wird und wobei der Speicherbehälter (32) während des Zwischenspeicherungsschritt (82) so mit der Inertgasquelle (28) in Wirkverbindung gebracht wird, dass eine Kontaktierung des Lebensmittels (40) mit Sauerstoff und/ oder der Umgebungsluft verhindert wird.

15. Verfahren (74) nach einem der Ansprüche 13 oder 14, **dadurch gekennzeichnet, dass** das Verfahren (74) mittels einer Anlage (1) gemäß einem der Ansprüche 7 bis 12 durchgeführt wird, wobei auf den Mischvorgang (76) oder den Zwischenspeicherungsschritt (82) ein Verpackungsvorgang (77) erfolgt, in dem mittels der Abfüllvorrichtung (33) das Lebensmittel (40) in die Abfüllarbeitsvolumens (46) abgepackt wird, wobei der Verpackungsvorgang (77) einen Abfüllschritt (83) und einen nach dem Abfüllschritt (83) erfolgenden Versiegelungsschritt (84) aufweist, wobei in dem Abfüllschritt (83) das Lebensmittel (40) zunächst von der Mischvorrichtung (3) und/ oder dem Speicherbehälter (32) zu der Abfüllvorrichtung (33) geleitet wird, wobei das Lebensmittel (40) anschließend mittels der Abfüllanordnung (42) der Abfüllvorrichtung (33) innerhalb des Abfüllarbeitsvolumens (45) in die Abfüllarbeitsvolumens (46) abgefüllt wird, wobei die befüllten Abfüllarbeitsvolumens (46) in dem Versiegelungsschritt (84), der sich an den Abfüllvorgang anschließt, mittels der Versiegelungsanordnung (43) verschlossen und versiegelt werden, wobei alle Arbeitsvolumina der Abfüllvorrichtung (33) in dem Inertgaseinleitungsschritt (85) mit dem Inertgas be- oder aufgefüllt werden und derart zumindest mittelbar mit der Inertgasquelle (28) in Wirkverbindung gebracht werden dass das Lebensmittel (40) ohne Umgebungsluft- und Sauerstoffkontakt abgefüllt wird.
